# FASCICULE DE BREVET EUROPEEN

(11) **EP 0 628 126 B1**
(45) Date de publication et mention de la délivrance du brevet: **08.10.1997**
(21) Numéro de dépôt: 93905418.5
(22) Date de dépôt: 24.02.1993
(51) Int. Cl.: E05F 15/14, E05D 15/10

(54) **PORTE COULISSANTE ET DISPOSITIF COMMANDANT L'OUVERTURE ET LA FERMETURE D'UNE PORTE COULISSANT HORIZONTALEMENT DANS UN VEHICULE**
SCHIEBETÜR UND STEUERUNGSVORRICHTUNG ZUM ÖFFNEN UND SCHLIESSEN EINER IN EINEM FAHRZEUG HORIZONTAL SCHIEBENDE TÜR
SLIDING DOOR AND OPEN AND CLOSE CONTROL DEVICE FOR A HORIZONTALLY SLIDABLE VEHICLE DOOR

(30) Priorité: 28.02.1992 FR 9202622
(43) Date de publication de la demande: 14.12.1994
(73) Titulaire: RUCHAT, René, CH-1290 Versoix (CH); PLANCHE, Bernard, 1219 Châtelaine (CH); ROCH, Jean, F-01280 Prévessin-Moens (FR)
(72) Inventeur: RUCHAT, René, CH-1290 Versoix (CH); PLANCHE, Bernard, 1219 Châtelaine (CH); ROCH, Jean, F-01280 Prévessin-Moens (FR)
(74) Mandataire: Kiehl, Hubert
(86) Numéro de dépôt international: FR9300178
(87) Numéro de publication internationale: WO9317211

(56) Documents cités:
- EP-A- 0 321 958
- EP-A- 0 478 536
- DE-A- 1 930 485
- DE-A- 2 036 560
- GB-A- 2 159 208
- US-A- 4 056 276

## Description

La présente invention est relative à une porte coulissante et un dispositif commandant l'ouverture et la fermeture d'une porte coulissant horizontalement dans un véhicule, et plus particulièrement d'une porte latérale, le début de l'ouverture s'accompagnant d'une translation transversale d'au moins une partie de la porte vers l'extérieur pour coulisser le long de la paroi latérale de la carrosserie. Ce double mouvement en début d'ouverture, mais donc aussi en fin de fermeture, rend le problème de la commande de l'ouverture et de la fermeture automatique d'une telle porte plutôt difficile à résoudre.

On connaît un dispositif de ce type comprenant un vérin pneumatique télescopique installé horizontalement contre la paroi interne de la carrosserie au dessus de la fenêtre arrière et dont l'extrémité de la tige mobile est articulée à un chariot coulissant dans un guide. Ce chariot est relié par une biellette à l'extrémité d'un bras vertical coudé monté pivotant dans la porte coulissante et accouplé à la poignée de commande d'ouverture de la serrure. Ainsi, le retrait de la tige de vérin fait reculer le chariot, ce qui entraîne au travers de la biellette d'abord le pivotement du bras libérant la serrure, puis une traction en arrière sur ce même bras provoquant l'ouverture de la porte.

Toutefois, dans ce dispositif pneumatique, toute une partie du circuit, notamment le compresseur, la réserve d'air comprimé, les lignes d'alimentation et le vérin restent en permanence sous pression, ce qui peut s'avérer particulièrement dangereux pour les passagers en cas d'explosion lors d'un accident de trafic ou si l'une des pièces vient à se rompre par usure prématurée due aux contraintes et sollicitations présentes dans un véhicule. De plus, le dispositif de verrouillage et déverrouillage de la porte coulissante par un bras de renvoi est particulièrement complexe, ce qui diminue la fiabilité à long terme. Par ailleurs, ce dispositif ne peut plus lancer la porte en avant avec une vitesse suffisante pour la fermer et la verrouiller lorsque le véhicule se situe sur une déclivité, la pression maximum acceptable étant encore trop faible. Enfin et surtout, ce dispositif s'avère particulièrement onéreux à réaliser.

Le document FR 997 335 décrit également un dispositif de commande de l'ouverture et de la fermeture d'une porte coulissante de véhicule basé sur piston dont la manoeuvre est commandé par pression ou dépression. Toutefois, la présence de pression dans un véhicule n'est guère appréciée car elle constitue un danger en cas d'accident. Surtout, l'actuateur à piston n'est nullement fixé contre la face interne de la carrosserie, mais au plancher et à distance de cette carrosserie. Alors, la liaison entre l'extrémité de la tige de piston et la porte est réalisée par un mécanisme complexe comprenant une biellette raccordée à une extension latérale d'une console massive coulissant le long d'une barre cylindrique de support.

Ce mécanisme de liaison complexe peut se mettre à vibrer verticalement du fait que la console peut librement tourner autour de sa barre cylindrique de support ; et il peut également vibrer d'avant en arrière si cette console n'est pas suffisament rigide, soit au niveau de son extension latérale, soit au niveau de sa fixation sur sa barre.

Un autre dispositif de ce type, décrit dans le document DE 1 930 485, comprend une vis sans fin horizontale tenue mobile en rotation contre la carrosserie au dessus de la porte, cette vis étant d'une part engagée dans l'orifice taraudé d'un premier chariot mobile en translation le long de la vis, et d'autre part pouvant être tournée par un électromoteur rotatif. Ce premier chariot est lié à un second chariot mobile en translation le long d'une coulisse fixée également à la carrosserie parallèlement sous la vis sans fin. Ce second chariot est relié à l'angle supérieur frontal de la porte par une liaison supportant le poids de la porte et comprenant de ce fait d'une part une partie pendulaire montée par une charnière horizontale au chariot, et d'autre part une plaque boulonnée à la porte et assemblée à la partie pendulaire par deux tiges filetées permettant un réglage en hauteur.

Toutefois, ce dispositif s'avère inutilement complexe, donc onéreux à réaliser, car le poids de la porte coulissante est généralement déjà supporté par un autre rail de guidage de porte situé soit à mi-hauteur soit à la base. De plus, la liaison avec la porte ne peut être que rigide car elle travaille en cisaillement aussi bien à l'ouverture qu'à la fermeture de la porte, ce qui implique des mouvements saccadés dès qu'apparaissent des difficultés momentanées dans le coulissement de la porte ou du chariot.

Le but de la présente invention est un dispositif commandant l'ouverture et la fermeture d'une porte coulissant dans un véhicule qui soit efficace, c'est-à-dire apte à imposer le mouvement de la porte en toutes circonstances et même après de nombreuses utilisations, mais qui soit aussi d'un fonctionnement souple et rapide. De plus, la conception de ce dispositif doit être suffisamment simple pour qu'il puisse être réalisé de manière rigide, à un coût abordable et qu'il puisse être rapporté sans autre dans des véhicules existants.

A cette fin, l'invention a pour objet une porte coulissante et dispositif de commande tel que défini par la revendication 1, dans laquelle les caractéristiques mentionnées en préambule sont connues du document DE-A-1 930 485.

Ces buts sont réalisés grâce à un dispositif comprenant une vis sans fin horizontale tenue mobile en rotation à l'intérieur d'un rail fixé à la carrosserie au dessus (ou en dessous) de la porte, cette vis étant d'une part engagée dans l'orifice taraudé d'un chariot mobile en translation à l'intérieur de ce même rail, et d'autre part pouvant être tournée par un électromoteur rotatif, le chariot étant relié à la porte par une biellette unique sensiblement horizontale et orientée dans l'axe de la vis sans fin, cette biellette opérant alors en poussée et en traction dans son sens longitudinal. En d'autres termes, cette biellette présente un angle inférieur à 25 degrés avec cette vis sans fin.

L'ouverture de la porte s'accompagnant d'une translation transversale d'une partie au moins de cette porte vers l'extérieur afin que le déplacement ultérieur de cette porte puisse s'effectuer le long de la paroi latérale de la carrosserie, il s'est avéré utile de relier la biellette à un bras orienté vers l'intérieur du véhicule préexistant ou rapporté sur la porte.

Le déport vers l'intérieur du point de traction exercée par l'extrémité de la biellette sur la porte et le fait que cette biellette soit sensiblement dans un plan horizontal permettent, lors du déverrouillage, d'appliquer, en plus de la traction orientée vers l'arrière, une composante vers l'extérieur, ce qui assiste le mouvement transversal initial de cette porte. Par la suite, le déport créé par ce bras fait que la traction exercée reste dans le prolongement de la vis sans fin, ce qui annule toute force latérale entre le chariot et la vis sans fin pendant la majeure partie du mouvement arrière.

Dans certains véhicules à portes coulissantes, un tel bras interne existe et supporte un pivot ou un galet coulissant dans un rail horizontal de guidage fixé au dessus de cette porte contre la carrosserie. Il s'est alors avéré judicieux d'installer le rail contenant la vis sans fin et le chariot parallèlement contre la face latérale interne de ce rail de guidage dans le plan horizontal. L'extrémité de la biellette est alors reliée directement à ce bras, et ce, de préférence, proche du galet de guidage ce qui minimise particulièrement les efforts de coincement.

Avantageusement, la biellette est un amortisseur à gaz et/ou à ressorts assurant une certaine souplesse du mouvement.

Après de nombreuses recherches en atelier, il s'est avéré que l'utilisation d'une vis sans fin ayant un pas de filetage compris entre 10 et 15 mm et tournant à une vitesse comprise entre 33,3 et 66,6 tours/seconde (2000 et 4000 tours/minute) donnait des résultats particulièrement satisfaisants quant à la vitesse de déplacement de la porte pour une puissance raisonnable donnée de l'électromoteur. Dans le cas d'une vitesse de rotation haute, on peut envisager une liaison directe avec un électromoteur. Pour une vitesse de rotation basse, on préfère alors combiner un électromoteur tournant à sa vitesse optimum comprise entre 66,6 et 100 tours/seconde (4000 et 6000 tours/minute) avec un réducteur d'un facteur 2 ou 3.

Afin de minimiser l'entretien, notamment la lubrification et de minimiser le bruit de fonctionnement, il est apparu particulièrement avantageux d'utiliser une vis sans fin réalisée en acier commercialisé sous la dénomination INOX marque déposée et de surmouler le chariot en matière synthétique autour d'un écrou lui-même réalisé en matière synthétique commercialisée sous la dénomination TEFLON marque déposée.

La serrure de la porte coulissante peut avantageusement être actionnée par un électro-aimant directement, ou au niveau d'un renvoi d'une tige de commande reliée à une poignée extérieure ou intérieure de la porte. Si la porte coulissante comprend une tige de commande unique reliant la serrure à une poignée extérieure ou intérieure de la porte, il peut être avantageux d'utiliser une paire d'actionneurs linéaires électriques disposés de part et d'autre dans le plan vertical de la tige de commande, celle-ci étant reliée aux actionneurs par un câble ou une paire de biellettes de manière symétrique par rapport à la tige.

L'alimentation en courant électrique de l'électro-aimant ou des actionneurs linéaires électriques à partir d'une source électrique du véhicule se fait, entre la porte et la carrosserie, de préférence par l'intermédiaire de doigts mobiles élastiquement venant en contact avec des plots en correspondance.

L'invention est décrite ci-après de façon plus détaillée à l'aide d'exemples d'exécution sans caractère limitatif illustrés aux dessins annexés dans lesquels :
- la figure 1 est une vue schématique à partir de l'intérieur d'un véhicule d'une porte latérale coulissante munie d'une première forme de réalisation du dispositif,
- la figure 2 est une vue schématique en perspective d'une seconde forme de réalisation du dispositif, et
- la figure 3 est une vue schématique en perspective d'une variante de la seconde forme de réalisation du dispositif.

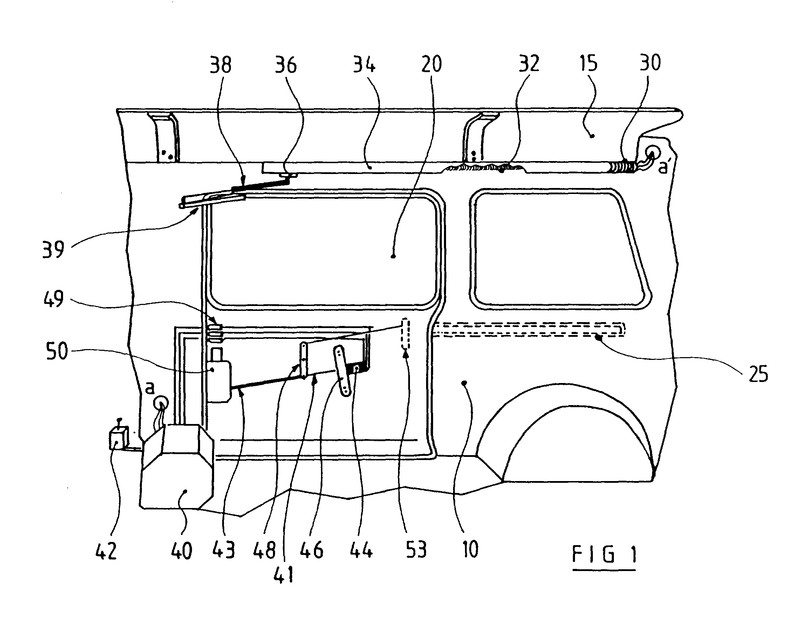

Sur la figure 1 est illustrée schématiquement une paroi latérale 10 de la carrosserie d'un véhicule comprenant une porte latérale coulissante 20 tel qu'un minibus ou une fourgonnette. Dans cet exemple, la porte coulissante 20 est guidée par une rainure sous-jacente non représentée et par une glissière 25 sur la face extérieure de la carrosserie.

Ce dispositif comprend un rail 34 monté horizontalement contre la face interne de la carrosserie 10 au départ du toit 15. Ce rail 34 contient une vis sans fin 32 montée mobile en rotation sur des paliers. Cette vis sans fin peut être tournée par un moteur électrique rotatif 30 installé à l'extrémité arrière du rail 34. Ce moteur électrique est alimenté en courant électrique à partir d'une batterie 40 par des fils passant à l'intérieur de la carrosserie du point a au point a'. Ce rail 34 comprend de plus un chariot 36 uniquement mobile en translation et engagé en un orifice taraudé par la vis sans fin 32. Ce chariot 36 comprend en sa partie inférieure un point d'attache pour une biellette 38 dont l'autre extrémité est reliée à l'extrémité interne d'un bras interne 39 fixé dans la partie supérieure avant de la porte coulissante 20. Cette biellette se présente alors orientée proche de l'horizontal et de l'axe longitudinal du rail, et ce d'un angle inférieur à 25 degrés, en fait de l'ordre de 15 degrés.

Avantageusement, le rail 34 est réalisé à partir d'un profilé d'aluminium dont la surface extérieure latérale ainsi qu'une surface supérieure inclinée à 45 degrés présentent toutes deux une rainure pour l'engagement de pièces permettant la fixation de ce rail contre la paroi interne de la carrosserie 10. Outre les qualités de rigidité et de légèreté d'un tel profilé d'aluminium, celui-ci peut facilement être repeint par la suite.

La longueur de la vis sans fin 32 est supérieure à celle de la porte coulissante d'environ 10 à 30 cm, et son diamètre est de l'ordre de 15 mm. Surtout, le pas de cette vis est compris entre 10 et 15 mm, de préférence 12,5 mm.

Le moteur électrique 30 est du type à courant continu alimenté sous 12 volts par la batterie 40 du véhicule au travers d'un interrupteur de commande 42. Ce moteur doit présenter une puissance supérieure à 100 watts, et de préférence à 150 watts et pouvoir tourner la vis sans fin à une vitesse de l'ordre de 2000 à 4000 tours/minute, de préférence 3000 tours/minute. Des moteurs électriques ayant les caractéristiques citées précédemment sont maintenant disponibles dans le commerce dans des boîtiers inférieurs à 40 mm ce qui permet de les installer directement dans le prolongement de la vis sans fin à l'extrémité arrière du rail, avec, si besoin un réducteur intercalé d'un facteur de 2 ou 3 pour maintenir de préférence sa vitesse de rotation à sa valeur nominale de l'ordre de 6000 tours/minute.

La vis sans fin 32 est réalisée en acier commercialisé sous la dénomination INOX marque déposée particulièrement résistant à la rouille, et cette vis est livrée avec un écrou réalisé en matière synthétique commercialisée sous la dénomination TEFLON marque déposée qui ne nécessite aucune lubrification. Le chariot 36 est alors simplement réalisé par surmoulage d'une pièce plastique autour de cet écrou. Ce chariot 36 pourrait être taillé à partir d'un bloc métallique et comporter un orifice interne muni de billes recirculées en relation avec le pas de la vis sans fin 32, mais ce mode de réalisation nécessite une lubrification régulière et s'avère beaucoup plus bruyant lors du fonctionnement.

La biellette 38 sensiblement horizontale de liaison entre le chariot 36 et le bras interne 39 de la porte 20 est de préférence un petit amortisseur à gaz évitant des à-coups lors des mouvements, à-coups toujours néfastes à la durée de vie des pièces composant le dispositif. Chaque extrémité de cette biellette comprend une calotte sphérique venant s'enclencher dans un pion sphérique respectivement du chariot et du bras, ce type de liaison permettant un large débattement angulaire aussi bien dans le sens vertical qu'horizontal. De plus, ce type de liaison peut être aisément défait si il apparaît nécessaire momentanément de découpler la porte coulissante 20 du dispositif d'ouverture et de fermeture automatique.

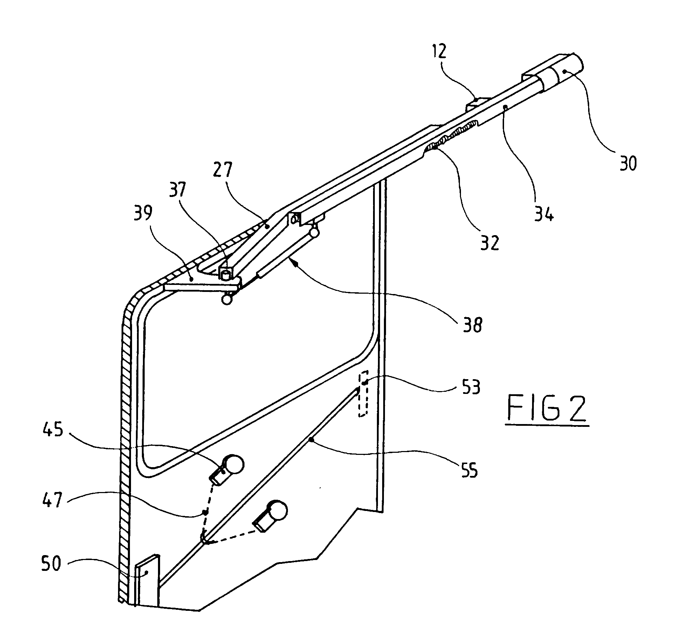

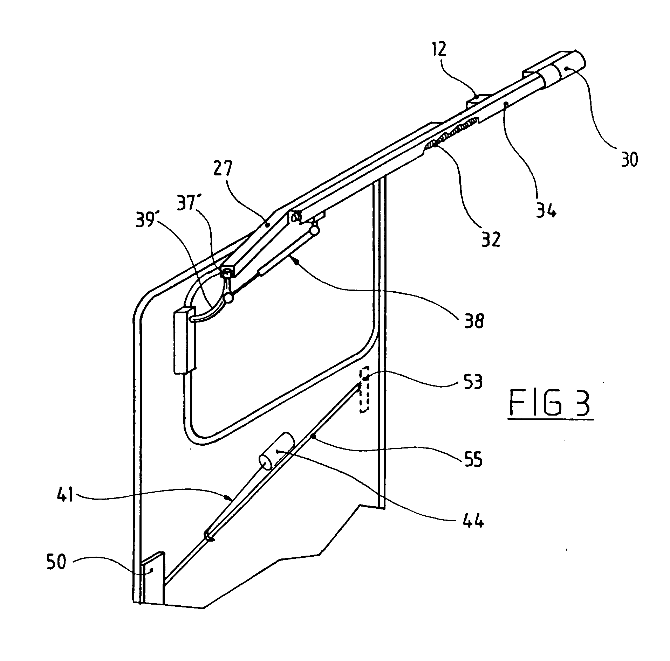

Les figures 2 et 3 illustrent une porte coulissante rencontrée plus fréquemment et comprenant au départ un bras interne 39,39' portant en son extrémité un galet ou pivot de guidage 37,37' pris dans un rail de guidage 27 fixé horizontalement contre la paroi interne de la carrosserie. Comme on peut l'observer, ce rail de guidage 27 comprend une première partie oblique guidant la porte 20 dans une translation simultanée vers l'arrière et vers l'extérieur permettant la sortie de la porte hors de la carrosserie avant coulissement parallèlement à la paroi latérale arrière. Dans ce cas, et comme illustré sur ces figures 2 et 3, le rail 34 est installé contre le rail de guidage 27, l'extrémité avant arrivant sensiblement à la fin de la partie oblique du rail de guidage. Si nécessaire, la partie arrière 34 et le moteur électrique 30 sont montés sur des cales 12. Avantageusement, l'extrémité avant de la biellette 38 est reliée à un pivot sphérique ménagé dans l'axe vertical du pivot de guidage 37 ou à proximité du galet 37'.

Comme illustré sur la figure 1, la serrure 50 de la porte coulissante 20 est reliée à la poignée extérieure 53 par une tige de commande 43 en deux parties liées au milieu par une barre de renvoi 48. Alors, il est possible d'installer un électro-aimant 44 sur un support 46 de telle sorte à ce que sa tige de sortie 41 soit directement dans le prolongement de la tige de commande 43 émergeant de la serrure 50. La fonction de cet électro-aimant 44 est d'actionner la serrure 50 juste au moment de l'ouverture de la porte.

Pour ce, cet électro-aimant est alimenté à partir de la batterie du véhicule 40 sous le contrôle de l'interrupteur 42 au travers de câbles dont la liaison entre la carrosserie 10 et la porte 20 est réalisée par un dispositif de doigts 49 montés dans l'épaisseur de la porte 20 et poussés en avant par des ressorts antérieurs, ces doigts touchant des plots de contact correspondants ménagés dans l'épaisseur du montant de cette porte. Un montage des doigts de contact 49 dans l'épaisseur du montant de porte et des plots de contact dans l'épaisseur de la porte peut également être envisagé.

Lorsque la liaison entre la poignée extérieure 53 et la serrure 50 est réalisée au moyen d'une tige unique 55 tel qu'illustré sur la figure 2 comme dans la majorité des cas, alors on peut installer une paire d'actionneurs linéaires électriques 45 dans le plan vertical de la porte et disposés symétriquement par rapport à cette tige de commande 55. Ces actionneurs sont alors reliés par un câble 47 faisant un angle compris entre 20 et 45 degrés par rapport à la tige. Bien évidemment, ce câble 47 peut être remplacé par deux biellettes, mais leur réalisation est plus lourde et plus onéreuse. Les actionneurs linéaires peuvent être du type "moteur de porte" disponibles dans le commerce et comprenant un moteur électrique très plat disposé transversalement par rapport à une crémaillère qui est engagée dans la roue dentée montée sur l'axe de sortie du moteur.

Lorsque la liaison entre la poignée extérieure 53 et la serrure 50 est réalisée au moyen d'une tige unique 55 tel qu'illustré sur la figure 3, on peut également installer un actionneur linéaire électrique 44 parallèlement et proche de cette tige de commande 55. Cet actionneur est alors directement relié par une tige 41 à la serrure 50.

Comme on peut aisément le comprendre, le basculement de l'interrupteur de commande 42 dans une première position dite "d'ouverture" provoque l'alimentation du courant électrique simultanément à l'électro-aimant 44 (ou aux actionneurs linéaires électriques 45) et au moteur électrique rotatif 30. La serrure 50 est immédiatement désenclenchée et la rotation de la vis sans fin 32 entraînant en arrière le chariot 36 provoque une traction dans le même sens de la biellette-amortisseur 38 sur le bras 39 de la porte 20, cette dernière commençant son mouvement d'ouverture. Compte-tenu de la vitesse de rotation du moteur et du pas de la vis sans fin 32, ce mouvement d'ouverture est particulièrement rapide de l'ordre de 2 secondes. A l'inverse, le basculement de l'interrupteur de commande 42 dans une deuxième position de "fermeture" provoque l'alimentation uniquement du moteur électrique rotatif 30 avec une polarité inversée par rapport à l'ouverture. Le chariot 36 est alors entraîné dans un mouvement d'avance forcé, ce qui provoque une poussée de la biellette-amortisseur 38 sur le bras 39 avec une force et une vitesse suffisante pour provoquer, en fin de parcours, une rentrée de la porte 20 dans le montant par une translation vers l'avant et vers l'intérieur suivie d'un enclenchement franc de la serrure 50. Lors de ce mouvement de rentrée, on apprécie l'orientation sensiblement horizontale ainsi que la liaison articulée de la biellette 38.

L'utilisation de la puissance électrique permet en outre l'adjonction d'un dispositif de sécurité. En effet, si la porte vient à être coincée, notamment en se refermant contre un passager, une surintensité dans l'alimentation électrique du moteur 30 peut immédiatement être détectée par un comparateur électrique pour couper immédiatement cette alimentation voire l'inverser pour provoquer un retrait partiel de cette porte.

De plus, ce dispositif électrique se prête aisément à une télécommande à distance remplaçant l'interrupteur de commande 42.

## Revendications

1. Porte coulissante et dispositif commandant l'ouverture et la fermeture de ladite porte (20) coulissant horizontalement dans un véhicule, la porte coulissante étant l'objet au début de l'ouverture et à la fin de la fermeture d'un double mouvement, la porte étant complétée, si désiré, d'une serrure (50), ce dispositif comprenant une vis sans fin (32) horizontale cenue mobile en rotation à l'intérieur d'un rail (34) fixé contre la face interne de la carrosserie au dessus ou en dessous de la porte, cette vis étant d'une part engagée dans l'orifice taraudé d'un chariot (36) mobile en translation à l'intérieur de ce même rail, et d'autre part pouvant être tournée par un électromoteur rotatif (30), ainsi que des moyens de liaison reliant le chariot (36) à la porte (20) caractérisé en ce que les moyens de liaison sont constitués par une biellette unique (38) dont une extrémité est attachée directement au chariot (36) et l'autre extrémité à la porte (20), biellette unique (38) dont l'axe longitudinal présente un angle inférieur à 25 degrés avec celui de la vis sans fin.

2. Porte coulissante et dispositif selon la revendication 1 dont le début de l'ouverture de la porte s'accompagne d'une translation transversale d'une partie au moins de cette porte vers l'extérieur, caractérisé en ce que la biellette (38) est reliée à un bras (39) orienté vers l'intérieur du véhicule préexistant ou rapporté sur la porte.

3. Porte coulissante et dispositif selon la revendication 2 caractérisé en ce que le bras interne (39) porte un pivot (37) ou galet (37') coulissant dans un rail horizontal de guidage (27) fixé au dessus de la porte (20) contre la carrosserie, le rail (34) contenant la vis sans fin (32) et le chariot (36) étant fixé dans le plan horizontal parallèlement contre la face latérale du rail de guidage (27) opposée à celle en vis-à-vis de la porte.

4. Porte coulissante et dispositif selon l'une des revendications précédentes, caractérisé en ce que le pas du filetage de la vis sans fin (32) est compris entre 10 et 15 millimètres, et en ce que cette vis sans fin tourne à une vitesse comprise entre 2000 et 4000 tours/minute.

5. Porte coulissante et dispositif selon l'une des revendications précédentes, caractérisé en ce que la vis sans fin (32) est réalisée en acier commercialisé sous la dénomination INOX marque déposée, et en ce que le chariot (36) est surmoulé en matière synthétique autour d'un écrou lui-même réalisé en matière synthétique commercialisée sous la dénomination TEFLON marque déposée.

6. Porte coulissante et dispositif selon l'une des revendications précédentes, caractérisé en ce que la biellette (38) est un amortisseur à gaz et/ou à ressorts.

7. Porte coulissante et dispositif selon l'une des revendications précédentes, caractérisé en ce que, lorsque présente, la serrure (50) de la porte coulissante (20) est actionnée par un électro-aimant (44) directement, ou au niveau d'un renvoi (48) d'une tige de commande (41) reliée à une poignée extérieure (53) ou intérieure de la porte.

8. Porte coulissante et dispositif selon l'une des revendications 1 à 6, caractérisé en ce que la serrure (50) de la porte coulissante (20) est actionnée par une paire d'actionneurs linéaires électriques disposés de part et d'autre dans le plan vertical d'une tige de commande (41) reliée à une poignée extérieure (53) ou intérieure de la porte, la tige étant reliée aux actionneurs de manière symétrique par un câble (47) ou une paire de biellettes.

9. Porte coulissante et dispositif selon l'une des revendications 7 ou 8, caractérisé en ce que l'alimentation en courant électrique de l'électro-aimant (44) ou des actionneurs linéaires électriques (45) à partir d'une source électrique (40) du véhicule se fait, entre la porte et la carrosserie, par l'intermédiaire de doigts mobiles élastiquement (49) venant en contact avec des plots en correspondance.

## Patentansprüche

1. Schiebetür und Steuerungsvorrichtung zum Öffnen und Schließen einer in einem Fahrzeug horizontal verschiebbaren Tür (20), wobei die Schiebetür zu Beginn ihrer Öffnung und am Ende ihrer Schließung eine Doppelbewegung ausführt, und wobei die Tür falls erforderlich mit einem Schloß (50) versehen ist, wobei die Steuerungsvorrichtung eine Schnecke (32) beinhaltet, die in horizontaler Richtung rotierbar im Inneren einer Führungsschiene (34) gehalten ist, die an der Innenseite der Karosserie oberhalb oder unterhalb der Tür befestigt ist, wobei diese Schnecke einerseits über eine Gewindebohrung mit einem innerhalb dieser Führungsschiene (34) verschiebbaren Schlitten (36) verbunden ist, und andererseits über einen elektrischen Rotationsmotor (30) gedreht werden kann, wobei auch Verbindungseinrichtungen vorgesehen sind, die den Schlitten (36) mit der Tür (20) verbinden,
dadurch gekennzeichnet, daß diese Verbindungseinrichtungen aus einer einteiligen Pleuelstange (38) bestehen, deren eines Ende unmittelbar mit dem Schlitten (36) und deren anderes Ende mit der Tür (20) verbunden ist, und deren Längsachse mit der Längsachse der Schnecke (32) einen Winkel von weniger als 25° einschließt.

2. Schiebetür und Steuerungsvorrichtung nach Anspruch 1, wobei der Anfang der Öffnung der Schiebetür von einer transversalen Verschiebebewegung zumindest eines Teils der Tür nach außen hin begleitet ist, dadurch gekennzeichnet, daß die Pleuelstange (38) mit einem Arm (39) verbunden ist, der an der Tür sich befindet oder dort aufgebracht ist und zum Innenraum des Fahrzeuges zeigt.

3. Schiebetür und Steuerungsvorrichtung nach Anspruch 2, dadurch gekennzeichnet, daß der innere Arm (39) ein Gelenk (37) oder eine Rolle (37') aufweist, das/die sich in einer horizontalen Führungsschiene (27) bewegt, die oberhalb der Tür (20) an der Karosserie befestigt ist, wobei die Schiene (34), die die Schnecke (32) und den Schlitten (36) beinhaltet, in einer horizontalen Ebene parallel an derjenigen Seitenfläche der Führungsschiene (27) befestigt ist, die von der Tür abgewandt ist.

4. Schiebetür und Steuerungsvorrichtung nach einem der vorhergehenden Ansprüche, dadurch gekennzeichnet, daß der Gewindegang der Schnecke (32) zwischen 10 mm und 15 mm liegt, und daß diese Schnecke mit einer Rotationsgeschwindigkeit zwischen 2000 und 4000 Umdrehungen pro Minute rotiert.

5. Schiebetür und Steuerungsvorrichtung nach einem der vorhergehenden Ansprüche, dadurch gekennzeichnet, daß die Schnecke (32) aus einem unter der Bezeichnung INOX (eingetragenes Warenzeichen) handelsüblichen Stahl hergestellt ist, und daß der Schlitten (36) aus Kunststoffmaterial um eine Mutter gespritzt ist, die ihrerseits aus einem Kunststoff besteht, der unter der Bezeichnung TEFLON (eingetragenes Warenzeichen) vertrieben wird.

6. Schiebetür und Steuerungsvorrichtung nach einem der vorhergehenden Ansprüche, dadurch gekennzeichnet, daß die Pleuelstange (38) ein Gasdruckstoßdämpfer oder ein Federstoßdämpfer ist.

7. Schiebetür und Steuerungsvorrichtung nach einem der vorhergehenden Ansprüche, dadurch gekennzeichnet, daß das Schloß (50) der Schiebetür (20), falls vorhanden, mittels eines Elektromagneten (44) unmittelbar betätigt wird, oder über einen Arm (48) eines Steuerschaftes (41), der mit einem äußeren oder inneren Griff (53) der Tür verbunden ist.

8. Schiebetür und Steuerungsvorrichtung nach einem der Ansprüche 1 bis 6, dadurch gekennzeichnet, daß das Schloß (50) der Schiebetür (20) mittels eines Paares von elektrischen Linearmotoren (45) betätigt wird, die vertikal in der Ebene eines Schaftes (55) angeordnet sind, der mit einem äußeren oder inneren Griff (53) der Tür verbunden ist, und daß der Schaft symmetrisch über ein Seil (47) oder ein Paar Pleuelstangen mit den Linearmotoren verbunden ist.

9. Schiebetür und Steuerungsvorrichtung nach einem der Ansprüche 7 oder 8, dadurch gekennzeichnet, daß die Stromversorgung des Elektromagneten (44) oder der Linearmotoren (45) über eine Stromquelle (40) des Fahrzeuges erfolgt, über zwischen der Tür und der Karosserie angeordnete elastische, bewegliche Anschlußfinger (49), die mit entsprechenden Kontakten verbindbar sind.

## Claims

1. Sliding door and device controlling the opening and closing of said door (20) sliding horizontally in a vehicle, the sliding door being subject at the beginning of opening and at the end of closure to a double movement, the door being completed, if desired, by a lock (50), this device comprising a horizontal worm (32) held so that it is able to rotate inside a rail (34) fixed against the inside face of the bodywork above or below the door, this worm at one end being engaged in the tapped hole of a carriage (36) able to move in translation inside this same rail and at the other end being able to be rotated by a rotary electric motor (30), as well as connection means connecting the carriage (36) to the door (20), characterised in that the connection means are constituted by a single connecting rod (38) whereof one end is attached directly to the carriage (36) and the other end to the door (20), a single connecting rod (38) whereof the longitudinal axis has an angle less than 25° with that of the worm.

2. Sliding door and device according to Claim 1, whereof the beginning of the opening of the door is accompanied by a transverse translation of at least part of this door towards the outside, characterised in that the connecting rod (38) is connected to an arm (39) oriented towards the inside of the pre-existing vehicle or attached to the door.

3. Sliding door and device according to Claim 2, characterised in that the inner arm (39) supports a pivot (37) or roller (37') sliding in a horizontal guide rail (27) fixed to the top of the door (20) against the bodywork, the rail (34) containing the worm (32) and the carriage (36) being fixed in the horizontal plane in parallel against the side face of the guide rail (27) remote from that facing the door.

4. Sliding door and device according to one of the preceding Claims, characterised in that the pitch of the screw thread of the worm (32) is comprised between 10 and 15 millimetres and in that this worm rotates at a speed of between 2000 and 4000 revolutions/minute.

5. Sliding door and device according to one of the preceding Claims, characterised in that the worm (32) is made from steel sold under the trade name INOX, which is a registered Trade Mark and that synthetic material is moulded over the carriage (36) around a nut, itself made from synthetic material sold under the trade name TEFLON, which is a registered Trade Mark.

6. Sliding door and device according to one of the preceding Claims, characterised in that the connecting rod (38) is a gas-operated shock-absorber and/or comprises springs.

7. Sliding door and device according to one of the preceding Claims, characterised in that, when present, the lock (50) of the sliding door (20) is actuated by an electromagnet (44) directly, or at the level of a reversing lever (48) of a control rod (41) connected to a handle (53) outside or inside the door.

8. Sliding door and device according to one of Claims 1 to 6, characterised in that the lock (50) of the sliding door (20) is actuated by a pair of electric linear actuators disposed on either side in the vertical plane of a control rod (55 ) connected to a handle (53) outside or inside the door, the rod being connected to the actuators symmetrically by a cable (47) or a pair of connecting rods.

9. Sliding door and device according to one of Claims 7 or 8, characterised in that the supply of electrical current to the electromagnet (44) or electric linear actuators (45) from an electrical source (40) of the vehicle takes place, between the door and the bodywork, through the intermediary of elastically movable lugs (49) coming into contact with corresponding contacts.
